# EUROPEAN PATENT APPLICATION

(11) **EP 4 644 005 A1**
(43) Date of publication of application: **05.11.2025**
(21) Application number: 24905157.4
(22) Date of filing: 06.06.2024
(51) Int. Cl.: B08B 1/12

(54) **DUST REMOVAL MECHANISM, DUST REMOVAL DEVICE, DUST REMOVAL METHOD, AND BATTERY PRODUCTION SYSTEM**

(30) Priority: 31.01.2024 CN 202410131055
(71) Applicant: Contemporary Amperex Technology Co., Limited, Ningde, Fujian 352100 (CN)
(72) Inventor: CAI, Fuding, Ningde, Fujian 352100 (CN); WU, Ying, Ningde, Fujian 352100 (CN); HAO, Pingzhen, Ningde, Fujian 352100 (CN)
(74) Representative: Gong, Jinping
(86) International application number: PCT/CN2024/097784
(87) International publication number: WO 2025/161231

(57) **Abstract**

The present application relates to a dust removal mechanism, a dust removal device, a dust removal method, and a battery production system. The dust removal mechanism includes a mounting base, a cleaning member rotatably disposed on the mounting base around an axis, and at least two dust suction members disposed on the mounting base, located at an outer periphery of the cleaning member, and located on two opposite sides of the cleaning member in a direction intersecting with the axis, where each of the dust suction members is provided with a dust suction port, and the dust suction port is not in contact with the cleaning member. When there is a need to perform dust removal on a to-be-cleaned member, the cleaning member of the dust removal mechanism may be rotated to clean the to-be-cleaned member, and dust particles adhering to the cleaning member, dust particles stirred up when the cleaning member is cleaning, or dust particles on the to-be-cleaned member are sucked away from the dust suction port through the dust suction member at the outer periphery of the cleaning member, thus achieving dust suction.

## Description

### CROSS-REFERENCE

The present application refers to the Chinese Patent Application No. 202410131055.X entitled "DUST REMOVAL MECHANISM, DUST REMOVAL DEVICE, DUST REMOVAL METHOD, AND BATTERY PRODUCTION SYSTEM" and filed on January 31, 2024, which is incorporated herein by reference in its entirety.

### TECHNICAL FIELD

The present application relates to the technical field of dust removal, and in particular, to a dust removal mechanism, a dust removal device, a dust removal method, and a battery production system.

### BACKGROUND

A battery module generally includes components such as battery cells and busbars. The busbars are generally welded to the positive and negative electrodes of the battery cells to realize series connection or parallel connection of the battery cells.

Due to splashing of welding slag during laser welding of the battery module, part of dust particles will adhere to the surfaces of the busbars. In the related art, the busbars are usually cleaned one by one by a manual air gun or a brush, but the cleaning efficiency is low and the cleaning effect is poor.

### SUMMARY

In view of the problems, the present application provides a dust removal mechanism, a dust removal device, a dust removal method, and a battery production system, which can alleviate the problems of low cleaning efficiency and poor cleaning effect in cleaning the busbar of a battery module during laser welding of the battery module.

In a first aspect, the present application provides a dust removal mechanism. The dust removal mechanism includes:
a mounting base;
a cleaning member rotatably disposed on the mounting base around an axis; and
at least two dust suction members disposed on the mounting base and located at an outer periphery of the cleaning member and located on two opposite sides of the cleaning member in a direction intersecting with the axis, where each of the dust suction members is provided with a dust suction port, and the dust suction port is not in contact with the cleaning member.

According to the above dust removal mechanism, when there is a need to perform dust removal on a to-be-cleaned member, the cleaning member of the dust removal mechanism may be rotated to clean the to-be-cleaned member, and dust particles adhering to the cleaning member, dust particles stirred up when the cleaning member is cleaning, or dust particles on the to-be-cleaned member are sucked away from the dust suction port through the dust suction member at the outer periphery of the cleaning member, thus achieving dust suction. Therefore, according to the dust removal mechanism in the embodiment of the present application, the to-be-cleaned member is cleaned through the rotating cleaning member, and dust particles are sucked through the dust suction member. In addition, the dust suction member is disposed at the outer periphery of the cleaning member, and the dust suction port is also not in contact with the cleaning member, such that the area of the dust suction port can be favorably reduced, and thereby the dust suction port is enabled to have a stronger suction force. Moreover, at least two dust suction members are located on the two opposite sides of the cleaning member in a direction intersecting with the axis, such that the suction efficiency can be improved in a limited space. Therefore, the overall cleaning efficiency is improved, and the cleaning stability and cleaning effect are excellent. In addition, the above dust removal mechanism is also applicable to automatic production of to-be-cleaned members.

In some embodiments, the dust removal mechanism includes a rotating shaft, the cleaning member is rotatably disposed on the mounting base through the rotating shaft, and each of the dust suction members is disposed on one side of the cleaning member in a direction perpendicular to the rotating shaft.

During the rotation of the cleaning member around the rotating shaft, the dust particles cleaned will undergo centrifugal motion or be flung away from the to-be-cleaned member by the cleaning member due to the rotating action of the cleaning member. Therefore, disposing the dust suction member on one side of the cleaning member in the direction perpendicular to the rotating shaft can enable better alignment with the motion direction of the dust particles, thus sucking more dust particles and thereby improving the cleaning efficiency.

In some embodiments, the dust suction port extends in a direction parallel to the rotating shaft.

In this way, the distribution position of the dust particles cleaned by the cleaning member can be covered as completely as possible, such that the cleaning efficiency is further improved.

In some embodiments, there are a plurality of cleaning members, and all the cleaning members rotate around the same rotating shaft and are spaced apart from each other in an axial direction of the rotating shaft.

By allowing the plurality of cleaning members to rotate around the same rotating shaft, the cleaning area can be increased, and thereby the cleaning efficiency is improved.

In some embodiments, the cleaning member includes a cleaning cylindrical brush, and the cleaning cylindrical brush is rotatably disposed on the mounting base.

In this way, under the rotation of the rotating shaft, the cleaning cylindrical brush can clean the surface of the to-be-cleaned member uninterruptedly.

In some embodiments, the dust removal mechanism includes a plurality of sub-dust removal mechanisms, each of the sub-dust removal mechanisms includes the mounting base, the cleaning member, and the dust suction member, and the sub-dust removal mechanisms are spaced apart from each other in a preset direction.

By providing a plurality of sub-dust removal mechanisms, the cleaning range of the to-be-cleaned member can be enlarged, and thereby the cleaning efficiency is improved.

In some embodiments, the cleaning members of the sub-dust removal mechanisms rotate around a same rotating shaft.

In this way, the rotating shafts can be driven to rotate by using the same rotation driving mechanism, such that the overall structure of the dust removal mechanism is simplified, and the cleaning members are allowed to rotate synchronously, thus improving the cleaning strength and resulting in the overall even stress on the dust removal mechanism.

In some embodiments, the dust removal mechanism further includes a rotation driving mechanism and a belt transmission mechanism, both the rotation driving mechanism and the belt transmission mechanism are mounted on the mounting base, the belt transmission mechanism is located between any two adjacent sub-dust removal mechanisms, and the belt transmission mechanism is in transmission connection to the rotating shaft and the rotation driving mechanism.

The mode of driving the rotating shaft to rotate by using the belt transmission mechanism is stable, such that the cleaning process is more stable. In addition, the belt transmission mechanism occupies little space, making the overall structure of the dust removal mechanism more compact.

In a second aspect, further provided is dust removal device including the dust removal mechanism according to any of the embodiments described above.

According to the above dust removal device, when there is a need to perform dust removal on a to-be-cleaned member, the cleaning member of the dust removal mechanism may be rotated to clean the to-be-cleaned member, and dust particles adhering to the cleaning member, dust particles stirred up when the cleaning member is cleaning, or dust particles on the to-be-cleaned member are sucked away from the dust suction port through the dust suction member at the outer periphery of the cleaning member, thus achieving dust suction. Therefore, the dust removal mechanism in the embodiment of the present application not only automatically cleans the to-be-cleaned member through the cleaning member, but also sucks dust particles through the dust suction member, thereby not only improving the cleaning efficiency and the cleaning stability, but also resulting in a better cleaning effect. In addition, the above dust removal device is also applicable to automatic production of to-be-cleaned members.

In some embodiments, the dust removal device further includes a motion mechanism, and the motion mechanism is connected to the dust removal mechanism for driving the dust removal mechanism to move.

By allowing the motion mechanism to be connected to the dust removal mechanism, the dust removal mechanism can be driven to move, such that the position of the dust removal mechanism relative to the to-be-cleaned member may be adjusted. In one aspect, the requirement for cleaning a plurality of cleaning positions of the to-be-cleaned member is met, and in another aspect, the position of the dust removal mechanism may also be adjusted to adapt to the current cleaning position of the to-be-cleaned member.

In some embodiments, the motion mechanism includes a first moving mechanism, a second moving mechanism, and a third moving mechanism; the first moving mechanism is connected to the second moving mechanism, and the first moving mechanism is configured to drive the second moving mechanism to move in a first direction; the second moving mechanism is connected to the third moving mechanism, and the second moving mechanism is configured to drive the third moving mechanism to move in a second direction; the third moving mechanism is connected to the dust removal mechanism, and the third moving mechanism is configured to drive the dust removal mechanism to move in a third direction.

The first direction, the second direction, and the third direction are perpendicular to each other.

By allowing the first moving mechanism, the second moving mechanism, the third moving mechanism, and the dust removal mechanism to be connected in sequence, the movement of the dust removal mechanism in the first direction, the second direction, and the third direction can be realized. The moving range is enlarged, and the moving direction is more accurate.

In some embodiments, the first moving mechanism, the second moving mechanism, and the third moving mechanism all are servo moving mechanisms.

By using the servo moving mechanisms, the amount of movement in the moving process can be controlled more accurately, such that the accurate cleaning effect is obtained.

In some embodiments, the dust removal device is provided with a receiving position and a dust removal position, the dust removal device further includes a jacking mechanism configured to receive a to-be-cleaned member at the receiving position and jack the to-be-cleaned member to the dust removal position, and the dust removal mechanism is configured to perform dust removal on the to-be-cleaned member at the dust removal position.

By allowing the jacking mechanism to receive the to-be-cleaned member at the receiving position and jacking the to-be-cleaned member to the dust removal position to be close to the dust removal mechanism for dust removal, the process of transferring the to-be-cleaned member to the dust removal position can be simplified, and the to-be-cleaned member can be away from the receiving position as far as possible and thereby be independent from the external environment. Therefore, the influence of other external environments on the dust removal of the dust removal mechanism is reduced, and thus the dust removal effect of the dust removal mechanism on the to-be-cleaned member located at the dust removal position at present is improved.

In some embodiments, the jacking mechanism includes a lifting platform, a bevel guide base, and a jacking driving mechanism, the lifting platform is supported on the bevel guide base for carrying the to-be-cleaned member, and the jacking driving mechanism is connected to the lifting platform for driving the lifting platform to move up and down along the bevel guide base.

The mode of guiding the lifting platform to move up and down through the bevel guide base can enable the receiving position and the dust removal position to be separated not only in a vertical direction, but also in a transverse direction. In one aspect, the influence of the jacking mechanism on the transportation of the to-be-cleaned member on a conveyor line is reduced. In another aspect, the mounting space in the vertical direction can be saved, such that the overall structure of the dust removal device is more compact, and the occupied space is less.

In some embodiments, a rolling wheel is disposed at a side of the lifting platform facing the bevel guide base, and the rolling wheel is in contact with the bevel guide base.

By allowing the lifting platform to be in contact with the bevel guide base through the rolling wheel, the lifting platform can be in rolling connection to the bevel guide base, such that the friction resistance of the lifting platform when moving on the bevel guide base is reduced, and it is easier for the lifting platform to move up and down under the driving action of the jacking driving mechanism.

In a third aspect, provided is a battery production system including the dust removal device in any of the embodiments described above.

According to the above battery production system, when there is a need to perform dust removal on a to-be-cleaned member, the cleaning member of the dust removal mechanism may be rotated to clean the to-be-cleaned member, and dust particles adhering to the cleaning member, dust particles stirred up when the cleaning member is cleaning, or dust particles on the to-be-cleaned member are sucked away from the dust suction port through the dust suction member at the outer periphery of the cleaning member, thus achieving dust suction. Therefore, the dust removal mechanism in the embodiment of the present application not only automatically cleans the to-be-cleaned member through the cleaning member, but also sucks dust particles through the dust suction member, thereby not only improving the cleaning efficiency and the cleaning stability, but also resulting in a better cleaning effect. In addition, the dust removal mechanism is also applicable to automatic production of to-be-cleaned members.

In a fourth aspect, further provided is a dust removal method using the dust removal device in any of the embodiments described above. The dust removal method includes:
controlling the cleaning member of the dust removal mechanism to rotate around the axis and controlling the dust suction member of the dust removal mechanism to start dust suction; and
performing dust removal on a to-be-cleaned member through the dust removal mechanism.

In some embodiments, controlling the cleaning member of the dust removal mechanism to rotate around the axis and controlling the dust suction member of the dust removal mechanism to start dust suction specifically includes:
controlling the jacking mechanism to jack the to-be-cleaned member from the receiving position to the dust removal position;
detecting whether the jacking mechanism is jacking to a right position;
controlling the cleaning member of the dust removal mechanism to rotate around the axis and controlling the dust suction member of the dust removal mechanism to start dust suction if the jacking mechanism is jacking to the right position.

In some embodiments, performing dust removal on the to-be-cleaned member through the dust removal mechanism specifically includes:
controlling the motion mechanism to drive the dust removal mechanism to move to the dust removal position to perform dust removal on the to-be-cleaned member;
controlling the dust removal mechanism to perform dust removal at a current dust removal position for a preset duration;
controlling the motion mechanism to drive the dust removal mechanism to move to a next dust removal position to perform dust removal on the to-be-cleaned member; and
returning to the step of controlling the dust removal mechanism to perform dust removal at the current dust removal position for a preset duration until dust removal on the to-be-cleaned member at all dust removal positions is completed.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skills in the art may still derive other drawings from these drawings without creative efforts. In the drawings:
FIG. 1 is a schematic structural diagram of a dust removal mechanism according to one or more embodiments.
FIG. 2 is a schematic diagram of a part of the structure of the dust removal mechanism shown in FIG. 1.
FIG. 3 is a schematic sectional structural diagram of the dust removal mechanism shown in FIG. 1.
FIG. 4 is a schematic structural diagram of the dust removal mechanism shown in FIG. 1 from another angle of view.
FIG. 5 is a schematic structural diagram of a dust removal device according to one or more embodiments.
FIG. 6 is a side view of the dust removal device shown in FIG. 5.
FIG. 7 is a schematic structural diagram of a jacking mechanism according to one or more embodiments.
FIG. 8 is a side view of the jacking mechanism shown in FIG. 7.
FIG. 9 is a flow diagram of steps of a dust removal method according to one or more embodiments.
FIG. 10 is a flow diagram of steps of a dust removal method according to another one or more embodiments.

Reference numerals:
dust removal mechanism 100;
mounting base 10, mounting bottom plate 11, first mounting side plate 12, second mounting side plate 13, accommodating cavity 14, cleaning member 20, dust suction member 30, dust suction port 31, rotating shaft 40, dust suction duct 50, sub-dust removal mechanism 60, rotation driving mechanism 70, belt transmission mechanism 80;
dust removal device 200;
motion mechanism 210, first moving mechanism 211, first sliding guide rail 2111, second moving mechanism 212, second sliding guide rail 2121, third moving mechanism 213, third sliding guide rail 2131, jacking mechanism 220, lifting platform 221, support surface 2211, rolling wheel 2212, bevel guide base 222, bevel 2221, first plane 2222, second plane 2223, jacking driving mechanism 223, support frame 230, conveying mechanism 240, conveying roller 241.

### DETAILED DESCRIPTION

Embodiments of the technical solutions of the present application will be described in detail below with reference to the drawings. The following embodiments are only for illustrating the technical solutions of the present application more clearly, and therefore are only exemplary and do not limit the protection scope of the present application.

Unless otherwise defined, all technical and scientific terms used herein have the same meaning as commonly understood by those skilled in the technical field to which the present application belongs. The terms used herein are only for illustrating the specific embodiments, rather than limiting the present application. The terms "include", "comprise" and "provided with", and any variations thereof in the specification and claims of the present application and the above-mentioned drawing description encompass non-exclusive inclusions.

In the description of the embodiments of the present application, technical terms such as "first", "second", and the like are only used to distinguish different objects and should not be interpreted as indicating or implying the relative importance or implicitly indicating the number, specific order, or primary and secondary relationship of the indicated technical features. In the description of the embodiments of the present application, unless otherwise specifically defined, "a plurality of" means two or more than two.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "1 and/or 2" may denote: the presence of 1 alone, the simultaneous presence of 1 and 2, and the presence of 2 alone. In addition, the character "/" herein generally indicates an "or" relationship between the associated objects before and after the "/".

In the description of the embodiments of the present application, the term "a plurality of" refers to no less than two (including two). Similarly, "a plurality of groups" refers to no less than two groups (including two groups), and "a plurality of pieces" refers to no less than two pieces (including two pieces).

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicating directional or positional relationships are based on the directional or positional relationships shown in the drawings. They are merely for the convenience of describing the embodiments of the present application and simplifying the description, and are not intended to indicate or imply that the devices or elements referred to must have specific directions or be constructed and operated in specific directions. Therefore, these terms should not be construed as limitations on the embodiments of the present application.

In the description of the embodiments of the present application, unless otherwise clearly specified and defined, the technical terms "mount", "interconnect", "connect", "fix", and the like should be interpreted in their broad senses. For example, "connect" may be "fixedly connect", "detachably connect", or "integrally connect"; "mechanically connect" or "electrically connect"; or "directly interconnect", "indirectly interconnect through an intermediate", "communication between interiors of two elements", or "interaction between two elements". For those of ordinary skill in the art, the specific meanings of the above terms in the embodiments of the present application can be interpreted according to specific conditions.

At present, as the new energy automobile industry develops rapidly, the demand for battery modules of the new energy automobiles increases greatly, such that the demand for the automatic production of battery modules is increasing, and the technological requirement for the production of the battery modules is also increasingly high.

The battery module generally includes a plurality of battery cells connected in parallel or in series via busbars, and specifically, the busbars need to be connected to positive electrodes or negative electrodes of the battery cells.

In the related art, a laser welding method is often used to connect the busbars and the positive electrodes or the negative electrodes of the battery cells. Laser welding is a method for welding by means of heat generated by bombarding a weldment with a focused laser beam as an energy source. In the process of welding the busbars to the positive electrodes or the negative electrodes of the battery cells, welding slag easily splashes, such that part of dust particles will adhere to the surfaces of the busbars. If not cleared away in time, the dust particles will flow out along with the battery module. If the dust particles fall into the battery module at random, the dust particles will lead to failure of the protective layer inside the battery module, which results in short circuit inside the battery module. Therefore, the performance of the battery module will be affected to a certain extent.

In order to relieve the adhesion of dust particles to the surfaces of the busbars in the laser welding process, after welding is completed, an air gun will be manually used for blowing air to remove dust of the busbars, or a brush and the like are used for cleaning the busbars on the battery module one by one. This not only consumes considerable time and effort, but also exhibits low cleaning efficiency and poor cleaning stability, and a good cleaning effect cannot be ensured. In addition, it is not suitable for automatic production of battery modules.

Based on the above consideration, the embodiment of the present application designs a dust removal mechanism including a mounting base, a cleaning member, and at least two dust suction members. The cleaning member is rotatably disposed on the mounting base around an axis, and the at least two dust suction members are disposed on the mounting base and located at the outer periphery of the cleaning member and are located on two opposite sides of the cleaning member in a direction intersecting with the axis; the dust suction member is provided with a dust suction port, and the dust suction port is not in contact with the cleaning member.

Therefore, when there is a need to perform dust removal on the surface of the busbar of the battery module, the cleaning member of the dust removal mechanism may be rotated to clean the surface of the busbar, and dust particles adhering to the cleaning member, dust particles stirred up when the cleaning member is cleaning, or dust particles on the battery module are sucked away from the dust suction port through the dust suction member at the outer periphery of the cleaning member, thus achieving dust suction. Therefore, according to the dust removal mechanism in the embodiment of the present application, the surface of the busbar is cleaned through the rotating cleaning member, and dust particles are sucked through the dust suction member. In addition, the dust suction member is disposed at the outer periphery of the cleaning member, and the dust suction port is also not in contact with the cleaning member, such that the area of the dust suction port can be favorably reduced, and thereby the dust suction port is enabled to have a stronger suction force. Moreover, at least two dust suction members are located on the two opposite sides of the cleaning member in a direction intersecting with the axis, such that the suction efficiency can be improved in a limited space. Therefore, the overall cleaning efficiency is improved, and the cleaning stability and cleaning effect are excellent. In addition, the dust removal mechanism in the embodiment of the present application is also applicable to automatic production of battery modules.

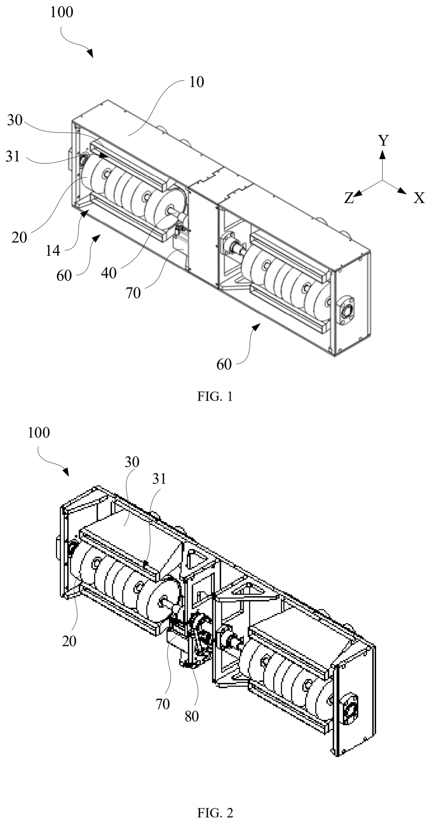

FIG. 1 is a schematic structural diagram of a dust removal mechanism according to one or more embodiments, and FIG. 2 is a schematic structural diagram of a part of the structure of the dust removal mechanism shown in FIG. 1. Referring to FIGs. 1 and 2, the embodiment of the present application provides a dust removal mechanism 100. The dust removal mechanism 100 includes a mounting base 10, a cleaning member 20, and at least two dust suction members 30. The cleaning member 20 is rotatably disposed on the mounting base 10 around an axis. The at least two dust suction members 30 are disposed on the mounting base 10 and located at the outer periphery of the cleaning member 20 and are located on two opposite sides of the cleaning member 20 in a direction intersecting with the axis. The dust suction member 30 is provided with a dust suction port 31, and the dust suction port 31 is not in contact with the cleaning member 20.

In the embodiment of the present application, the dust removal mechanism 100 is configured to perform dust removal on the to-be-cleaned member. In a specific embodiment of the present application, the dust removal mechanism 100 may perform dust removal on the battery module, and the dust removal process of the dust removal mechanism 100 on the battery module may be performed after the busbar of the battery module is laser-welded to the positive electrode or the negative electrode of the battery cells, and in other embodiments, the dust removal mechanism 100 may also perform dust removal on other to-be-cleaned members.

The mounting base 10 refers to a base body structure capable of providing mounting conditions for other components, and the mounting base 10 itself can be mounted on an external mechanism, such that the cleaning member 20 and the dust suction member 30 can be mounted together with the mounting base 10. The mounting base 10 may be an overall structure or may be formed by splicing a plurality of assemblies.

The cleaning member 20 refers to a component capable of being in contact with the surface of a to-be-cleaned member to clean the to-be-cleaned member. Specifically, the cleaning member 20 may be a brush, cleaning cloth, an adhesive member, or the like.

When the cleaning member 20 rotates relative to the mounting base 10, relative movement can be generated between the cleaning member and the surface of the to-be-cleaned member, such that the dust particles on the to-be-cleaned member can be better removed, resulting in better cleaning effect.

The dust suction member 30 is a component capable of sucking the dust particles by a suction force to achieve a dust removal effect. The dust suction member 30 may include a dust suction duct, a dust suction head housing, or the like.

The dust suction member 30 being disposed at the outer periphery of the cleaning member 20 may be being disposed around a part of the outer periphery of the cleaning member 20 or being disposed around the entire outer periphery of the cleaning member 20 like a ring.

Under the action of the suction force, the to-be-cleaned member and the dust particles around the to-be-cleaned member are sucked away from the dust suction port 31. The separation of the dust suction port 31 from the cleaning member 20 means that a certain distance is present between the dust suction port 31 and the cleaning member 20 to enable the two to maintain an independent positional relationship.

The at least two dust suction members 30 being located on two opposite sides of the cleaning member 20 in a direction intersecting with the axis means that either all of the dust suction members 30 are located on the two opposite sides of the cleaning member 20 or part of the dust suction members 30 are located on the two opposite sides of the cleaning member 20.

The at least two dust suction members 30 may be arranged uniformly on the two opposite sides of the cleaning member 20. For example, one dust suction member 30 is disposed on one side of the cleaning member 20 and one dust suction member 30 is also disposed on the opposite side. In this way, the suction airflow around the cleaning member 20 can be distributed evenly, such that the suction efficiency is improved. Certainly, the at least two dust suction members 30 may also be unevenly disposed on the two opposite sides of the cleaning member 20.

Therefore, when there is a need to perform dust removal on the to-be-cleaned member, the cleaning member 20 of the dust removal mechanism 100 may be rotated to clean the to-be-cleaned member, and dust particles adhering to the cleaning member 20, dust particles stirred up when the cleaning member 20 is cleaning, or dust particles on the to-be-cleaned member are sucked away from the dust suction port 31 through the dust suction member 30 at the outer periphery of the cleaning member 20, thus achieving dust suction. Therefore, according to the dust removal mechanism 100 in the embodiment of the present application, the to-be-cleaned member is cleaned through the rotating cleaning member 20, and dust particles are sucked through the dust suction member 30. In addition, the dust suction member 30 is disposed at the outer periphery of the cleaning member 20, and the dust suction port 31 is also not in contact with the cleaning member 20, such that the area of the dust suction port 31 can be favorably reduced, and thereby the dust suction port 31 is enabled to have a stronger suction force. Moreover, at least two dust suction members 30 are located on the two opposite sides of the cleaning member 20 in a direction intersecting with the axis, such that the suction efficiency can be improved in a limited space. Therefore, the overall cleaning efficiency is improved, and the cleaning stability and cleaning effect are excellent. In addition, the dust removal mechanism 100 in the embodiment of the present application is also applicable to automatic production of to-be-cleaned members.

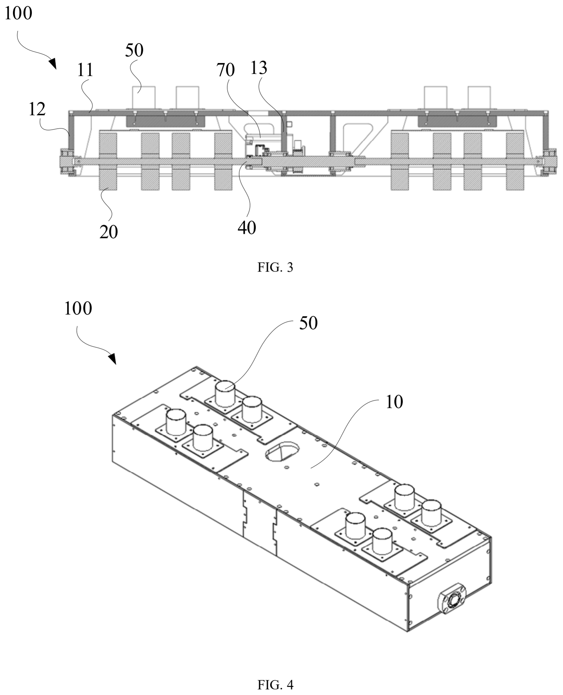

Referring to FIG. 3, according to some embodiments of the present application, the mounting base 10 includes a mounting bottom plate 11, a first mounting side plate 12, and a second mounting side plate 13, and the first mounting side plate 12 and the second mounting side plate 13 are located on the same side of the mounting bottom plate 11 and are opposite to each other. The mounting bottom plate 11, the first mounting side plate 12, and the second mounting side plate 13 define, in an enclosing manner, an accommodating cavity 14 with an opening at one side, and the cleaning member 20 is mounted in the accommodating cavity 14 and at least partially protrudes from the opening. The dust suction member 30 is mounted on the mounting bottom plate 11.

Further, the dust removal mechanism 100 further includes a rotating shaft 40, the cleaning member 20 is mounted on the rotating shaft 40, and both ends of the rotating shaft 40 are rotatably connected to the first mounting side plate 12 and the second mounting side plate 13, respectively.

According to some embodiments of the present application, there are a plurality of cleaning members 20, and all the cleaning members 20 rotate around the same rotating shaft 40 and are spaced apart from each other in an axial direction of the rotating shaft 40.

By allowing the plurality of cleaning members 20 to rotate around the same rotating shaft 40, the cleaning area can be increased, and thereby the cleaning efficiency is improved.

According to some embodiments of the present application, the cleaning member 20 includes a cleaning cylindrical brush rotatably disposed on the mounting base 10.

In this way, under the rotation of the rotating shaft 40, the cleaning cylindrical brush can clean the surface of the to-be-cleaned member uninterruptedly.

Specifically, the cleaning cylindrical brush is fixed on the rotating shaft 40 in a penetrating manner. When there are a plurality of cleaning members 20, all the cleaning members 20 are cleaning cylindrical brushes and are fixed on the same rotating shaft 40 in a penetrating manner.

According to some embodiments of the present application, the dust removal mechanism 100 further includes a rotating shaft 40, the cleaning member 20 is rotatably disposed on the mounting base 10 via the rotating shaft 40, and the dust suction member 30 is located on one side of the cleaning member 20 in a direction perpendicular to the rotating shaft 40.

Specifically, the rotating shaft 40 in the embodiment of the present application is parallel to the X direction shown in FIG. 1, and the direction perpendicular to the rotating shaft 40 may be the Y direction or the Z direction. It should be noted here that, in order not to affect the cleaning member 20's cleaning of the to-be-cleaned member, the dust suction member 30 should be disposed in a way that provides necessary clearance, and in the embodiment of the present application, the cleaning member 20 cleans the to-be-cleaned member using the lower side in the Z direction, and therefore, the dust suction member 30 is disposed on one side of the cleaning members 20 in the Y direction.

During the rotation of the cleaning member 20 around the rotating shaft 40, the dust particles cleaned will undergo centrifugal motion or be flung away from the to-be-cleaned member by the cleaning member 20 due to the rotating action of the cleaning member 20. Therefore, disposing the dust suction member 30 on one side of the cleaning member 20 in the direction perpendicular to the rotating shaft 40 can enable better alignment with the motion direction of the dust particles, thus sucking more dust particles and thereby improving the cleaning efficiency.

Further, the dust suction port 31 extends in a direction parallel to the rotating shaft 40.

In this way, the distribution position of the dust particles cleaned by the cleaning member 20 can be covered as completely as possible, such that the cleaning efficiency is further improved.

Specifically, the dust suction port 31 is elongated and extends in a direction parallel to the rotating shaft 40.

In the embodiment of the present application, in order to increase the suction force of the dust suction port 31, the cross-sectional area of a dust suction channel communicating with the dust suction port 31 in the dust suction member 30 gradually increases along a direction away from the dust suction port 31.

Referring to FIG. 4, in the embodiment of the present application, the end of the dust suction member 30 distal to the dust suction port 31 is further provided with a connection port communicating with the dust suction channel, and the connection port is connected to a negative pressure source through a dust suction duct 50.

Specifically, the connection port of the dust suction member 30 may be connected to the mounting base 10, and specifically, may be connected to the mounting bottom plate 11, and the mounting base 10 may be provided with a through hole to allow the connection port to communicate with the dust suction duct 50. There may be a plurality of through holes, and the plurality of through holes communicate with a plurality of dust suction ducts 50, respectively. In this way, a stronger suction force can be provided to the dust suction channel of the dust suction member 30, thus improving the cleaning strength.

Referring to FIGs. 1 and 2 again, according to some embodiments of the present application, the dust removal mechanism 100 includes a plurality of sub-dust removal mechanisms 60, and each sub-dust removal mechanism 60 includes a mounting base 10, a cleaning member 20, and a dust suction member 30. The sub-dust removal mechanisms 60 are spaced apart from each other in a preset direction.

By providing a plurality of sub-dust removal mechanisms 60, the cleaning range of the to-be-cleaned member can be enlarged, and thereby the cleaning efficiency is improved.

In some embodiments, the sub-dust removal mechanisms 60 are spaced apart from each other in an axial direction of the rotating shaft 40.

In some embodiments, the cleaning members 20 of the sub-dust removal mechanisms 60 may all rotate around the same rotating shaft 40.

That is, the rotating shafts 40 of the sub-dust removal mechanisms 60 are connected to form a whole. In this way, the rotating shafts 40 can be driven to rotate by using the same rotation driving mechanism 70, such that the overall structure of the dust removal mechanism 100 is simplified, and the cleaning members 20 are allowed to rotate synchronously, thus improving the cleaning strength and resulting in the overall even stress on the dust removal mechanism 100.

In the embodiment of the present application, the dust removal mechanism 100 further includes a rotation driving mechanism 70 and a belt transmission mechanism 80. Both the belt transmission mechanism 80 and the rotation driving mechanism 70 may be mounted on the mounting base 10, and the belt transmission mechanism 80 is in transmission connection between the rotating shaft 40 and the rotation driving mechanism 70.

The mode of driving the rotating shaft 40 to rotate by using the belt transmission mechanism 80 is stable, such that the cleaning process is more stable. In addition, the belt transmission mechanism 80 occupies little space, making the overall structure of the dust removal mechanism 100 more compact.

Specifically, the belt transmission mechanism 80 is located between two adjacent sub-dust removal mechanisms 60. Specifically, the belt transmission mechanism may be mounted on the outer side of the mounting base 10 of one sub-dust removal mechanism 60 facing another sub-dust removal mechanism 60, such as the first mounting side plate 12 or the second mounting side plate 13, and the rotation driving mechanism 70 is mounted on the inner side of the mounting base 10 to penetrate through the mounting base 10 to be in transmission connection to the belt transmission mechanism 80 on the outer side. By disposing the belt transmission mechanism 80 between two adjacent sub-dust removal mechanisms 60, the axial stress on the rotating shaft 40 is even, and the rotating reliability of the rotating shaft 40 is improved.

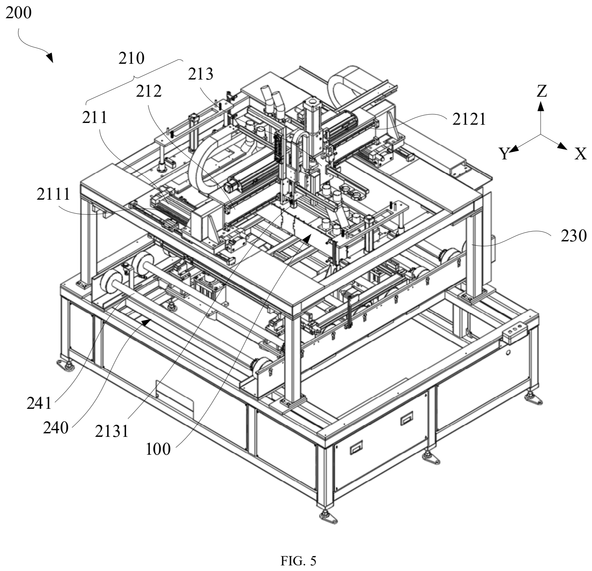

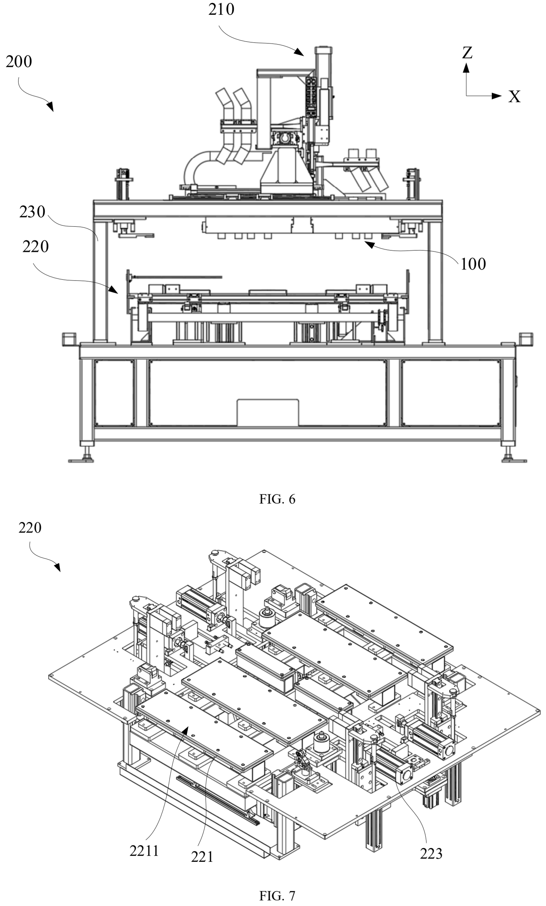

Referring to FIGs. 5 and 6, in addition, a dust removal device 200 is further provided in an embodiment of the present application, and the dust removal device includes the dust removal mechanism 100 in any of the embodiments described above.

When there is a need to perform dust removal on the to-be-cleaned member, the cleaning member 20 of the dust removal mechanism 100 may be rotated to clean the to-be-cleaned member, and dust particles adhering to the cleaning member 20, dust particles stirred up when the cleaning member 20 is cleaning, or dust particles on the to-be-cleaned member are sucked away from the dust suction port 31 through the dust suction member 30 at the outer periphery of the cleaning member 20, thus achieving dust suction. Therefore, the dust removal mechanism 100 in the embodiment of the present application not only automatically cleans the to-be-cleaned member through the cleaning member 20, but also sucks dust particles through the dust suction member 30, thereby not only improving the cleaning efficiency and the cleaning stability, but also resulting in a better cleaning effect. In addition, the dust removal device in the embodiment of the present application is also applicable to automatic production of to-be-cleaned members.

According to some embodiments of the present application, the dust removal device 200 further includes a motion mechanism 210, and the motion mechanism 210 is connected to the dust removal mechanism 100 for driving the dust removal mechanism 100 to move.

The motion mechanism 210 is a mechanism capable of driving the dust removal mechanism 100 to move in a preset direction. The route in which the motion mechanism 210 drives the dust removal mechanism 100 to move may be either a single direction or a combination of a plurality of directions.

By allowing the motion mechanism 210 to be connected to the dust removal mechanism 100, the dust removal mechanism 100 can be driven to move, such that the position of the dust removal mechanism 100 relative to the to-be-cleaned member may be adjusted. In one aspect, the requirement for cleaning a plurality of cleaning positions of the to-be-cleaned member is met, and in another aspect, the position of the dust removal mechanism 100 may also be adjusted to adapt to the current cleaning position of the to-be-cleaned member.

Specifically, the motion mechanism 210 includes a first moving mechanism 211, a second moving mechanism 212, and a third moving mechanism 213. The first moving mechanism 211 is connected to the second moving mechanism 212, and the first moving mechanism 211 is configured to drive the second moving mechanism 212 to move in the first direction; the second moving mechanism 212 is connected to the third moving mechanism 213, and the second moving mechanism 212 is configured to drive the third moving mechanism 213 to move in the second direction; the third moving mechanism 213 is connected to the dust removal mechanism 100 and is configured to drive the dust removal mechanism 100 to move in the third direction. The first direction, the second direction, and the third direction are perpendicular to each other.

Specifically, the first direction is the X direction shown in FIG. 5, the second direction is the Y direction shown in FIG. 5, and the third direction is the Z direction shown in FIG. 5.

By allowing the first moving mechanism 211, the second moving mechanism 212, the third moving mechanism 213, and the dust removal mechanism 100 to be connected in sequence, the movement of the dust removal mechanism 100 in the first direction, the second direction, and the third direction can be realized. The moving range is enlarged, and the moving direction is more accurate.

Specifically, the first moving mechanism 211 includes a first sliding guide rail 2111 extending in the first direction, and the second moving mechanism 212 is slidably fitted to the first sliding guide rail 2111.

In some embodiments, there may be a plurality of first sliding guide rails 2111, all the first sliding guide rails 2111 are spaced apart from each other in the second direction, and the second moving mechanism 212 is slidably fitted to all the first sliding guide rails 2111.

The second sliding mechanism 212 includes a second sliding guide rail 2121 extending in the second direction, and the third moving mechanism 213 is slidably fitted to the second sliding guide rail 2121.

In some embodiments, there are a plurality of second sliding guide rails 2121, all the second sliding guide rails 2121 are spaced apart from each other in the third direction, and the third moving mechanism 213 is slidably fitted to all the second sliding guide rails 2121.

The third sliding mechanism 213 includes a third sliding guide rail 2131 extending in the third direction, and the dust removal mechanism 100 is slidably fitted to the third sliding guide rail 2131.

In some embodiments, there are a plurality of third sliding guide rails 2131, all the third sliding guide rails 2131 are spaced apart from each other in the second direction, and the dust removal mechanism 100 is slidably fitted to all the third sliding guide rails 2131.

The above mode of disposing the sliding guide rails can improve the motion stability of the dust removal mechanism 100 in all directions, thereby allowing the dust removal mechanism 100 to reliably perform dust removal on the to-be-cleaned member.

According to some embodiments of the present application, the first moving mechanism 211, the second moving mechanism 212, and the third moving mechanism 213 all are servo moving mechanisms.

By using the servo moving mechanisms, the amount of movement in the moving process can be controlled more accurately, such that the accurate cleaning effect is obtained.

In the embodiment of the present application, the motion mechanism 210 may be a three-axis gantry servo driving mechanism.

Referring to FIGs. 6-8, according to some embodiments of the present application, the dust removal device 200 is provided with a receiving position and a dust removal position. The dust removal device 200 further includes a jacking mechanism 220. The jacking mechanism 220 is configured to receive a to-be-cleaned member at the receiving position and jack the to-be-cleaned member to the dust removal position, and the dust removal mechanism 100 is configured to perform dust removal on the to-be-cleaned member at the dust removal position.

The jacking mechanism 220 is configured to jack the to-be-cleaned member, such that the to-be-cleaned member can be close to the dust removal mechanism 100 and thereby subjected to dust removal by the dust removal mechanism 100. Specifically, the jacking mechanism 220 may receive a to-be-cleaned member on a conveyor line of the to-be-cleaned member.

By allowing the jacking mechanism 220 to receive the to-be-cleaned member at the receiving position and jacking the to-be-cleaned member to the dust removal position to be close to the dust removal mechanism 100 for dust removal, the process of transferring the to-be-cleaned member to the dust removal position can be simplified, and the to-be-cleaned member can be away from the receiving position as far as possible and thereby be independent from the external environment. Therefore, the influence of other external environments on the dust removal of the dust removal mechanism 100 is reduced, and thus the dust removal effect of the dust removal mechanism 100 on the to-be-cleaned member located at the dust removal position at present is improved.

Specifically, the dust removal device 200 further includes a support frame 230. The dust removal mechanism 100 is disposed on the support frame 230, and the jacking mechanism 220 is located below the support frame 230 in the vertical direction.

According to some embodiments of the present application, the jacking mechanism 220 includes a lifting platform 221, a bevel guide base 222, and a jacking driving mechanism 223. The lifting platform 221 is supported on the bevel guide base 222 for carrying the to-be-cleaned member, and the jacking driving mechanism 223 is connected to the lifting platform 221 for driving the lifting platform 221 to move up and down along the bevel guide base 222.

The lifting platform 221 is a main body structure that moves up and down and can support the to-be-cleaned member to drive the to-be-cleaned member to move up and down.

The lifting platform 221 may be provided with a support surface 2211, and the support surface 2211 is configured to support the to-be-cleaned member. When the lifting platform 221 supports the to-be-cleaned member to the dust removal position, the dust removal mechanism 100 can perform dust removal on the to-be-cleaned member on the support surface 2211, and therefore, the lifting platform 221 may also serve as a surface for fixing the to-be-cleaned member.

The bevel guide base 222 is provided with a bevel 2221, and the bevel 2221 is obliquely disposed with respect to both the vertical direction and the horizontal direction and can guide the lifting platform 221 thereon to move up and down. Specifically, the surface of the bevel guide base 222 in contact with the lifting platform 221 includes the bevel 2221. The bevel guide base 222 may also support the lifting platform 221 to allow the lifting platform 221 to move reliably thereon.

The jacking driving mechanism 223 is a power source of the jacking mechanism 220 and is configured to provide power to the lifting platform 221 to move along the bevel guide base 222. It may be understood that the power output end of the jacking driving mechanism 223 is connected to the lifting platform 221. The jacking driving mechanism 223 is a linear driver. The linear driver includes, but is not limited to, an electric pneumatic cylinder, an electric hydraulic cylinder, a rack and pinion driver, a ball screw driver, and the like. This is not specifically limited herein.

The mode of guiding the lifting platform 221 to move up and down through the bevel guide base 222 can enable the receiving position and the dust removal position to be separated not only in a vertical direction, but also in a transverse direction. In one aspect, the influence of the jacking mechanism 220 on the transportation of the to-be-cleaned member on a conveyor line is reduced. In another aspect, the mounting space in the vertical direction can be saved, such that the overall structure of the dust removal device 200 is more compact, and the occupied space is less.

Specifically, the dust removal device 200 further includes a conveying mechanism 240. The conveying mechanism 240 is configured to convey the to-be-cleaned member, and the jacking mechanism 220 is configured to receive the to-be-cleaned member from the conveying mechanism 240 at the receiving position.

The conveying mechanism 240 may include a plurality of conveying rollers 241 disposed in sequence in the conveying direction, and the to-be-cleaned member is conveyed by the rotation of the conveying rollers 241. In other embodiments, the conveying mechanism 240 may also include a conveyor belt or the like.

According to some embodiments of the present application, a rolling wheel 2212 is disposed at a side of the lifting platform 221 facing the bevel guide base 222, and the rolling wheel 2212 is in contact with the bevel guide base 222.

The rolling wheel 2212 can roll with respect to the bevel guide base 222 when the lifting platform 221 moves up and down along the bevel guide base 222. There may be a plurality of rolling wheels 2212 of the lifting platform 221, and the plurality of rolling wheels 2212 may be evenly disposed on the lifting platform 221.

By allowing the lifting platform 221 to be in contact with the bevel guide base 222 through the rolling wheel 2212, the lifting platform 221 can be in rolling connection to the bevel guide base 222, such that the friction resistance of the lifting platform 221 when moving on the bevel guide base 222 is reduced, and it is easier for the lifting platform 221 to move up and down under the driving action of the jacking driving mechanism 223.

In other embodiments, the lifting platform 221 and the bevel guide base 222 may be slidably connected.

Due to the arrangement of the rolling wheel 2212, the friction resistance of the lifting platform 221 when moving on the bevel guide base 222 is reduced. When the lifting platform 221 stops at the receiving position and the jacking position, if the lifting platform is still on the bevel 2221 of the bevel guide base 222, the jacking driving mechanism 223 is needed to provide an acting force to maintain the lifting platform at a current position, which not only brings certain damage to the jacking driving mechanism 223, but also is harmful for stably supporting the to-be-cleaned member by the lifting platform 221 at the current position. Therefore, in the embodiment of the present application, the bevel guide base 222 further includes a first plane 2222 and a second plane 2223. The first plane 2222 and the second plane 2223 are respectively connected to two opposite sides of the bevel 2221. The lifting platform 221 can receive the to-be-cleaned member at the receiving position when the lifting platform 221 moves to the first plane 2222, and the lifting platform 221 can jack the to-be-cleaned member to the dust removal position when the lifting platform 221 moves to the second plane 2223.

Specifically, both the first plane 2222 and the second plane 2223 are disposed parallel to the horizontal plane.

In some embodiments, in order to fix the position of the to-be-cleaned member during the jacking process of the jacking mechanism 220 and in the subsequent dust removal process, a positioning member is disposed on the lifting platform 221, and the positioning member can cooperate with the to-be-cleaned member or a carrier carrying the to-be-cleaned member to position the to-be-cleaned member.

Specifically, the positioning member may be a positioning pin. A positioning pin hole is formed in the to-be-cleaned member or the carrier carrying the to-be-cleaned member, and the positioning pin can cooperate with the positioning pin hole to position the to-be-cleaned member. In other embodiments, the positioning member may also be a plurality of positioning blocks or the like disposed around the to-be-cleaned member or the carrier carrying the to-be-cleaned member.

In the embodiment of the present application, after the dust removal mechanism 100 finishes the dust removal of the to-be-cleaned member on the jacking mechanism 220, the jacking mechanism 220 is configured to lower the to-be-cleaned member after dust removal from the dust removal position to the receiving position, such that the conveying mechanism 240 continues to convey the to-be-cleaned member after dust removal to perform the subsequent steps.

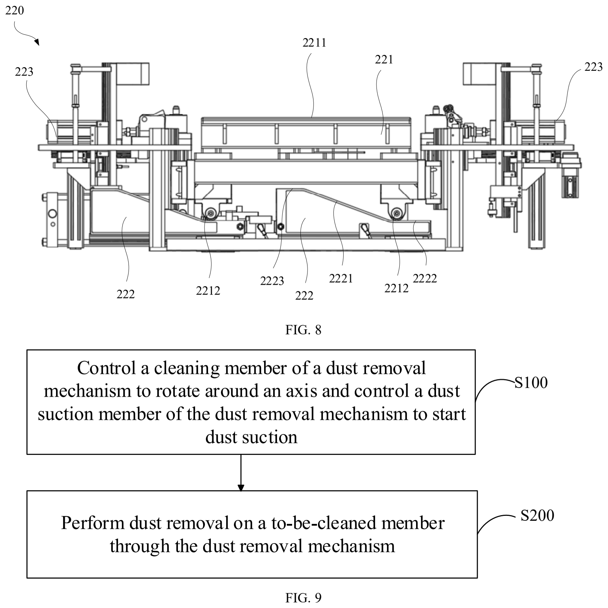

Referring to FIG. 9, in addition, a dust removal method is further provided in an embodiment of the present application, and the dust removal device 200 in any of the embodiments described above is used in the method. The dust removal method includes the following steps:
S100: controlling the cleaning member 20 of the dust removal mechanism 100 to rotate around the axis, and controlling the dust suction member 30 of the dust removal mechanism 100 to start dust suction; and
S200: performing dust removal on a to-be-cleaned member through the dust removal mechanism 100.

When there is a need to perform dust removal on the to-be-cleaned member, the cleaning member 20 of the dust removal mechanism 100 may be rotated to clean the to-be-cleaned member, and dust particles adhering to the cleaning member 20, dust particles stirred up when the cleaning member 20 is cleaning, or dust particles on the to-be-cleaned member are sucked away from the dust suction port 31 through the dust suction member 30 at the outer periphery of the cleaning member 20, thus achieving dust suction. Therefore, the dust removal mechanism 100 in the embodiment of the present application not only automatically cleans the to-be-cleaned member through the cleaning member 20, but also sucks dust particles through the dust suction member 30, thereby not only improving the cleaning efficiency and the cleaning stability, but also resulting in a better cleaning effect. In addition, the dust removal mechanism is also applicable to automatic production of to-be-cleaned members.

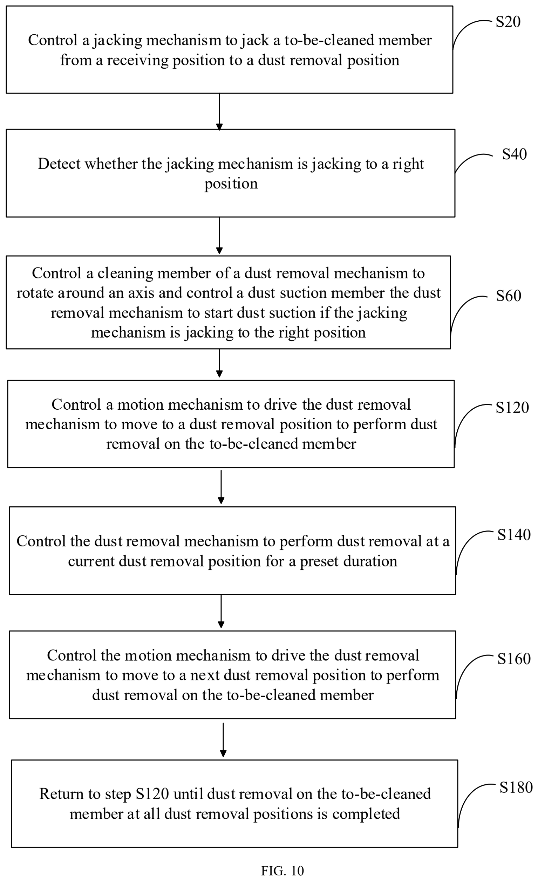

Referring to FIG. 10, further, step S100 specifically includes:
S20: controlling the jacking mechanism 220 to jack the to-be-cleaned member from the receiving position to the dust removal position;
S40: detecting whether the jacking mechanism 220 is jacking to a right position; and
S60: controlling the cleaning member 20 of the dust removal mechanism 100 to rotate around the axis and controlling the dust suction member 30 of the dust removal mechanism 100 to start dust suction if the jacking mechanism is jacking to the right position.

By allowing the jacking mechanism 220 to receive the to-be-cleaned member at the receiving position and jacking the to-be-cleaned member to the dust removal position to be close to the dust removal mechanism 100 for dust removal, the process of transferring the to-be-cleaned member to the dust removal position can be simplified, and the to-be-cleaned member can be away from the receiving position as far as possible and thereby be independent from the external environment. Therefore, the influence of other external environments on the dust removal of the dust removal mechanism 100 is reduced, and thus the dust removal effect of the dust removal mechanism 100 on the to-be-cleaned member located at the dust removal position at present is improved.

According to some embodiments of the present application, step S200 specifically includes:
S120: controlling the motion mechanism 210 to drive the dust removal mechanism 100 to move to the dust removal position to perform dust removal on the to-be-cleaned member;
S140: controlling the dust removal mechanism 100 to perform dust removal at the current dust removal position for a preset duration;
S160: controlling the motion mechanism 210 to drive the dust removal mechanism 100 to move to a next dust removal position to perform dust removal on the to-be-cleaned member; and
S180: returning to step S120 until the dust removal on the to-be-cleaned member at all dust removal positions is completed.

Because the area of the to-be-cleaned member requiring dust removal may be large, the dust removal of the dust removal mechanism 100 at the same dust removal position cannot meet the requirement of comprehensive dust removal. By controlling the motion mechanism 210 to drive the dust removal mechanism 100 to move to the dust removal positions in sequence for dust removal, the dust removal effect can be improved.

Further, after step S180, the dust removal method further includes:
controlling the motion mechanism 210 to drive the dust removal mechanism 100 to return to a preset initial position.

By allowing the motion mechanism 210 to return to the preset initial position, next dust removal for another to-be-cleaned member can be facilitated.

In order to understand the dust removal method in the embodiment of the present application in more detail, the following description is made with reference to a specific embodiment of the dust removal method:
the to-be-cleaned member is a battery module, and a module carrier carrying the battery module is conveyed into the dust removal device 200 through the conveying mechanism 240;
the jacking mechanism 220 receives the module carrier at the receiving position and jacks by taking the bottom support of the module carrier as a reference, and in the jacking process, the positioning pin on the lifting platform 221 is inserted into the positioning pin hole of the module carrier;
after the jacking mechanism 220 jacks the module carrier to the dust removal position, the dust removal device 200 detects whether the jacking mechanism 220 is jacking to a right position, and if so, the cleaning member 20 of the dust removal mechanism 100 is controlled to rotate, and the dust suction member 30 starts to suck;
the three-axis gantry servo driving mechanism drives the dust removal mechanism 100 to move from the original position to the position right above the dust removal position in the horizontal direction, and the current dust removal position is the dust removal initial position;
the three-axis gantry servo driving mechanism drives the dust removal mechanism 100 to descend to the dust removal initial position in the vertical direction to perform dust removal on the battery module;
after the dust removal mechanism 100 stays at the current dust removal position for several seconds, the three-axis gantry servo driving mechanism drives the dust removal mechanism 100 to move to the next dust removal position in the length direction of the battery module to perform dust removal on another region for dust removal of the battery module;
step 6 is repeated until dust removal on all regions for dust removal on the battery module are finished, and the three-axis gantry servo driving mechanism drives the dust removal mechanism 100 to ascend above the battery module in the vertical direction and return to the original position;
the jacking mechanism 220 descends to the receiving position, and in the descending process, the positioning pin on the lifting platform 221 is separated from the positioning pin hole of the module carrier;
the conveying mechanism 240 conveys the module carrier carrying the battery module that has been subjected to dust removal out of the dust removal device 200.

In addition, a battery production system is further provided in an embodiment of the present application, and the battery production system includes the dust removal device 200 in any of the embodiments described above.

When there is a need to perform dust removal on the to-be-cleaned member, the cleaning member 20 of the dust removal mechanism 100 may be rotated to clean the to-be-cleaned member, and dust particles adhering to the cleaning member 20, dust particles stirred up when the cleaning member 20 is cleaning, or dust particles on the to-be-cleaned member are sucked away from the dust suction port 31 through the dust suction member 30 at the outer periphery of the cleaning member 20, thus achieving dust suction. Therefore, the dust removal mechanism 100 in the embodiment of the present application not only automatically cleans the to-be-cleaned member through the cleaning member 20, but also sucks dust particles through the dust suction member 30, thereby not only improving the cleaning efficiency and the cleaning stability, but also resulting in a better cleaning effect. In addition, the dust removal mechanism is also applicable to automatic production of to-be-cleaned members.

Specifically, the battery production system further includes a welding device. The welding device is located upstream of the dust removal device 200 in the conveying direction of the to-be-cleaned member and is configured to weld the to-be-welded member to form the to-be-cleaned member.

Specifically, the battery production system further includes an assembling device for a to-be-welded member, which is configured to assemble the to-be-welded member.

Specifically, in the embodiment of the present application, the to-be-welded member includes an assembly formed by assembling a plurality of battery cells and a busbar, the plurality of battery cells and the busbar are assembled in the assembling device, the welding device is configured to weld the assembled battery cells and busbar, and the dust removal device 200 is configured to perform dust removal on the plurality of battery cells and the busbar that are welded.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some or all of the technical features; however, these modifications or substitutions do not make the essence of the corresponding technical solutions deviate from the scope of the technical solutions in the embodiments of the present application, and these modifications or substitutions shall all fall within the scope of claims and specification of the present application. In particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. A dust removal mechanism, comprising:
a mounting base;
a cleaning member rotatably disposed on the mounting base around an axis; and
at least two dust suction members disposed on the mounting base and located at an outer periphery of the cleaning member and located on two opposite sides of the cleaning member in a direction intersecting with the axis, wherein each of the dust suction members is provided with a dust suction port, and the dust suction port is not in contact with the cleaning member.

2. The dust removal mechanism according to claim 1, wherein the dust removal mechanism comprises a rotating shaft, the cleaning member is rotatably disposed on the mounting base through the rotating shaft, and each of the dust suction members is disposed on one side of the cleaning member in a direction perpendicular to the rotating shaft.

3. The dust removal mechanism according to claim 2, wherein the dust suction port extends in a direction parallel to the rotating shaft.

4. The dust removal mechanism according to any one of claims 1 to 3, wherein there are a plurality of cleaning members, and all the cleaning members rotate around a same rotating shaft and are spaced apart from each other in an axial direction of the rotating shaft.

5. The dust removal mechanism according to any one of claims 1 to 4, wherein each of the cleaning members comprises a cleaning cylindrical brush, and the cleaning cylindrical brush is rotatably disposed on the mounting base.

6. The dust removal mechanism according to any one of claims 1 to 5, wherein the dust removal mechanism comprises a plurality of sub-dust removal mechanisms, each of the sub-dust removal mechanisms comprises the mounting base, the cleaning member, and the dust suction member, and the sub-dust removal mechanisms are spaced apart from each other in a preset direction.

7. The dust removal mechanism according to claim 6, wherein the cleaning members of the sub-dust removal mechanisms rotate around a same rotating shaft.

8. The dust removal mechanism according to claim 7, wherein the dust removal mechanism further comprises a rotation driving mechanism and a belt transmission mechanism, both the rotation driving mechanism and the belt transmission mechanism are mounted on the mounting base, the belt transmission mechanism is located between any two adjacent sub-dust removal mechanisms, and the belt transmission mechanism is in transmission connection to the rotating shaft and the rotation driving mechanism.

9. A dust removal device, comprising the dust removal mechanism according to any one of claims 1 to 8.

10. The dust removal device according to claim 9, wherein the dust removal device further comprises a motion mechanism connected to the dust removal mechanism for driving the dust removal mechanism to move.

11. The dust removal device according to claim 10, wherein the motion mechanism comprises a first moving mechanism, a second moving mechanism, and a third moving mechanism; the first moving mechanism is connected to the second moving mechanism, and the first moving mechanism is configured to drive the second moving mechanism to move in a first direction; the second moving mechanism is connected to the third moving mechanism, and the second moving mechanism is configured to drive the third moving mechanism to move in a second direction; the third moving mechanism is connected to the dust removal mechanism, and the third moving mechanism is configured to drive the dust removal mechanism to move in a third direction;
wherein the first direction, the second direction, and the third direction are perpendicular to each other.

12. The dust removal device according to claim 11, wherein the first moving mechanism, the second moving mechanism, and the third moving mechanism all are servo moving mechanisms.

13. The dust removal device according to any one of claims 9 to 11, wherein the dust removal device is provided with a receiving position and a dust removal position, the dust removal device further comprises a jacking mechanism configured to receive a to-be-cleaned member at the receiving position and jack the to-be-cleaned member to the dust removal position, and the dust removal mechanism is configured to perform dust removal on the to-be-cleaned member at the dust removal position.

14. The dust removal device according to claim 13, wherein the jacking mechanism comprises a lifting platform, a bevel guide base, and a jacking driving mechanism, the lifting platform is supported on the bevel guide base for carrying the to-be-cleaned member, and the jacking driving mechanism is connected to the lifting platform for driving the lifting platform to move up and down along the bevel guide base.

15. The dust removal device according to claim 14, wherein a rolling wheel is disposed at a side of the lifting platform facing the bevel guide base, and the rolling wheel is in contact with the bevel guide base.

16. A battery production system, comprising the dust removal device according to any one of claims 9 to 15.

17. A dust removal method using the dust removal device according to any one of claims 9 to 15, the dust removal method comprising:
controlling the cleaning member of the dust removal mechanism to rotate around the axis and controlling the dust suction member of the dust removal mechanism to start dust suction; and
performing dust removal on a to-be-cleaned member through the dust removal mechanism.

18. The dust removal method according to claim 17, wherein controlling the cleaning member of the dust removal mechanism to rotate around the axis and controlling the dust suction member of the dust removal mechanism to start dust suction specifically comprises:
controlling the jacking mechanism to jack the to-be-cleaned member from the receiving position to the dust removal position;
detecting whether the jacking mechanism is jacking to a right position; and
controlling the cleaning member of the dust removal mechanism to rotate around the axis and controlling the dust suction member of the dust removal mechanism to start dust suction if the jacking mechanism is jacking to the right position.

19. The dust removal method according to claim 17 or 18, wherein performing dust removal on the to-be-cleaned member through the dust removal mechanism specifically comprises:
controlling the motion mechanism to drive the dust removal mechanism to move to the dust removal position to perform dust removal on the to-be-cleaned member;
controlling the dust removal mechanism to perform dust removal at a current dust removal position for a preset duration;
controlling the motion mechanism to drive the dust removal mechanism to move to a next dust removal position to perform dust removal on the to-be-cleaned member; and
returning to the step of controlling the dust removal mechanism to perform dust removal at the current dust removal position for a preset duration until dust removal on the to-be-cleaned member at all dust removal positions is completed.
